# EUROPÄISCHE PATENTSCHRIFT

(11) **EP 2 715 089 B1**
(45) Veröffentlichungstag und Bekanntmachung des Hinweises auf die Patenterteilung: **08.07.2015**
(21) Anmeldenummer: 12720168.9
(22) Anmeldetag: 09.05.2012
(51) Int. Cl.: F02B 37/12, F16K 1/20, F16K 27/02, F02B 37/18

(54) **ABGASTURBOLADER MIT EINEM KUGELHAHN-WASTEGATE-VENTIL MIT SPANNUNGSENTLASTETEM KURBELARM**
EXHAUST-GAS TURBOCHARGER HAVING A BALL-COCK WASTE-GATE VALVE WITH A STRESS-RELIEVED CRANK ARM
TURBOCOMPRESSEUR À GAZ D'ÉCHAPPEMENT COMPORTANT UNE VANNE À DÉCHARGE/À BOISSEAU SPHÉRIQUE POURVUE D'UN BRAS DE MANIVELLE À DÉTENTE DES CONTRAINTES

(30) Priorität: 27.05.2011 DE 102011076587
(43) Veröffentlichungstag der Anmeldung: 09.04.2014
(73) Patentinhaber: Continental Automotive GmbH, 30165 Hannover (DE)
(72) Erfinder: JÄGLE, Alexander, 68309 Mannheim (DE); HERFURTH, Roland, 93051 Regensburg (DE)
(86) Internationale Anmeldenummer: PCT/EP2012/058506
(87) Internationale Veröffentlichungsnummer: WO 2012/163638

(56) Entgegenhaltungen:
- DE-A1- 2 828 223
- DE-A1- 3 336 879
- DE-A1-102008 011 416

## Beschreibung

Die Erfindung betrifft einen Abgasturbolader dessen Turbinengehäuse einen mit Hilfe eines Kugelhahn-Ventils verschließbaren Wastegate-Kanal aufweist.

Abgasturbolader werden vermehrt zur Leistungssteigerung bei Kraftfahrzeug-Verbrennungsmotoren eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.

Ein Abgasturbolader weist dazu eine im Abgasstrang des Verbrennungsmotors angeordnete Turbine mit einem durch den Abgasstrom angetriebenen Turbinenlaufrad und einen im Ansaugtrakt angeordneten Verdichter mit einem den Druck aufbauenden Verdichterlaufrad auf. Turbinenlaufrad und Verdichterlaufrad sind drehfest an den gegenüberliegenden Enden einer Rotorwelle befestigt, die in einer zwischen Turbine und Verdichter angeordneten Lagereinheit drehgelagert ist. Somit wird mit Hilfe des Abgasmassenstroms das Turbinenrad und über die Rotorwelle wiederum das Verdichterrad angetrieben und die Abgasenergie so zum Druckaufbau im Ansaugtrakt genutzt.

Turbinen und Verdichter sind Strömungsmaschinen und haben aufgrund der physikalischen Gesetzmäßigkeiten einen jeweils von Baugröße und Bauart abhängigen optimalen Betriebsbereich der durch den Massedurchsatz, das Druckverhältnis und die Drehzahl des jeweiligen Laufrades gekennzeichnet ist.

Im Gegensatz dazu ist der Betrieb eines Verbrennungsmotors in einem Kraftfahrzeug von dynamischen Änderungen der Last und des Betriebsbereiches gekennzeichnet.

Um nun den Betriebsbereich des Abgasturboladers an sich ändernde Betriebsbereiche des Verbrennungsmotors anpassen zu können und so ein gewünschtes Ansprechverhalten möglichst ohne spürbare Verzögerungen (Turboloch) zu gewährleisten werden Abgasturbolader mit sogenannten variablen Turbinengeometrien und mit über Ventilklappen öffenbaren Bypass-Kanälen ausgestattet. Ein entsprechender Bypass-Kanal auf der Turbinenseite wird als Wastegate bezeichnet. Das Wastegate verbindet den Abgaskanal in Strömungsrichtung vor dem Turbinenlaufrad mit dem Abgaskanal hinter dem Turbinenlaufrad. Das Wastegate kann über eine Schließvorrichtung, zum Beispiel eine Ventilklappe geöffnet oder geschlossen werden. Bei niedriger Drehzahl und dem entsprechend kleinen Abgasmassenstrom des Verbrennungsmotors ist das Wastegate geschlossen und der gesamte Abgasmassenstrom wird über das Turbinenlaufrad geführt. Dies gewährleistet eine ausreichende Drehzahl von Turbinen- und Verdichterlaufrad und somit einen ausreichenden Druckaufbau des Verdichters auch bei niedriger Drehzahl des Verbrennungsmotors. Bei hoher Drehzahl und entsprechend großem Abgasmassenstrom des Verbrennungsmotors wird dann das Wastegate geöffnet und zumindest ein Teil des Abgasmassenstroms am Turbinenlaufrad vorbei direkt in den Auspuffbereich in Strömungsrichtung hinter dem Turbinenlaufrad geleitet, um die Drehzahl von Turbinen- und Verdichterlaufrad sowie das Druckverhältnis an Turbine und Verdichter innerhalb des gewünschten Arbeitsbereichs des Abgasturboladers zu halten.

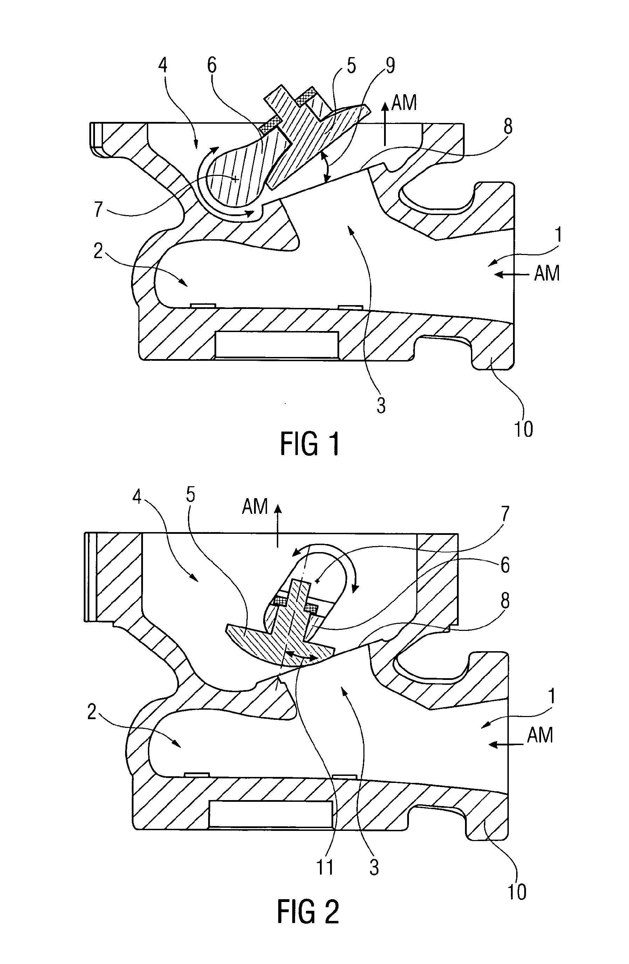

Als Schließvorrichtung zum Öffnen und Schließen des Wastegate-Kanals werden in bekannter Weise Klappenventile eingesetzt. Ein solches konventionelles Klappenventil ist in Figur 1 in einer Schnittdarstellung eines Turbinengehäuses 10 dargestellt. Über den Eintrittsbereich 1 tritt der Abgasmassenstrom AM in das Spiralgehäuse 2 der Abgasturbine ein. Aus dem Spiralgehäuse 2 wird der Abgasmassenstrom AM auf das Turbinenrad (nicht dargestellt) geleitet und tritt dann durch den Austrittsbereich 4 in das Abgassystem und durch dieses in die Umgebung aus. Der Wastegate-Kanal 3 verbindet nun auf direktem Weg den Eintrittsbereich 1 mit dem Austrittsbereich 4. Der Wastegate-Kanal 3 weist einen ebenen Ventilsitz 8 auf. Zum Schließen des Wastegate-Kanals wird ein Schließelement 5, in diesem Fall in Form einer tellerförmigen Ventilklappe auf den Ventilsitz 8 aufgelegt. Das Schließelement 5 ist an einem Kurbelarm 6 befestigt, der um die Kurbelspindeldrehachse 7 drehbar gelagert ist. Durch Drehung des Kurbelarms 6 um die Kurbelspindeldrehachse 7 wird das Schließelement 5 entlang des Schließ- Öffnungsweges 9 der Ventilklappe aus näherungsweise senkrechter Richtung auf den Ventilsitz 8 aufgesetzt und der Wast-Gate-Kanal 3 so geschlossen und in umgekehrter Richtung geöffnet.

Eine weitere Ausführung eines WasteGate-Ventils ist in DE102008011416A1 offenbart, sowie in Figur 2 und 3 in Schnittdarstellung dargestellt. Auch hier tritt über den Eintrittsbereich 1 der Abgasmassenstrom AM in das Spiralgehäuse 2 der Abgasturbine ein. Aus dem Spiralgehäuse 2 wird der Abgasmassenstrom AM auf das Turbinenrad (nicht dargestellt) geleitet und tritt dann durch den Austrittsbereich 4 in das Abgassystem und durch dieses in die Umgebung aus. Der Wastegate-Kanal 3 verbindet nun auf direktem Weg den Eintrittsbereich 1 mit dem Austrittsbereich 4. Bei dem Ventil handelt es sich um ein sogenanntes Kugelhahn-Ventil. Dabei ist das Schließelement 5 als Kugelsegment ausgebildet, das wiederum mit einem Kurbelarm 6 der Betätigungskurbel 14 verbunden ist. Der Kurbelarm 6 ist mittels der Kurbelspindel 12 und einer Spindellagerbuchse 13 um die Kurbelspindeldrehachse 7 drehbar in der Turbinengehäusewand 16 gelagert. Hier ist die Anordnung des Kurbelarms 6 und des Schließelements 5 am Kurbelarm 6 jedoch so gewählt, dass bei Drehung des Kurbelarms um die Achse 7 das Schließelement entlang eines Schließ-/Öffnungsweges 11 quasi parallel zum Ventilsitz 8 in den Wastegate-Kanal 3 einschwenkt und schließlich auf dem Ventilsitz 8 dichtend aufsitzt. Dies hat den Vorteil, dass die Abgaskraft, die auf das Schließelement und der Schließkraft entgegen wirkt mit einem kleineren Hebel auf den Kurbelarm 6 wirkt. Somit sind die erforderlichen Stellkräfte, die ein Aktuator auf den außen am Turbinengehäuse drehfest mit der Kurbelspindel 12 verbundnen Stellhebel 13 aufbringen muss, um das Ventil möglichst dicht zu schließen und geschlossen zu halten, wesentlich kleiner als bei der vorgenannten konventionellen Variante.

Der Nachteil dieser Ausführung ist jedoch, dass wesentlich größere Normalkräfte auf den Kurbelarm und über die Drehspindel auf die Spindellagerbuchse wirken und erhöhte Biegespannungen im Kurbelarm 6 und insbesondere im Übergang vom Kurbelarm 6 zur Drehspindel 12 wirken. Dieser Effekt wird noch verstärkt durch einen scharfkantigen Absatz 17 im Übergangsbereich zwischen Kurbelspindel 12 und Kurbelarm 6, der zugleich als Anlageanschlag und zur Abdichtung der Durchführung der Kurbelspindel durch die Turbinengehäusewand 16, nach Art einer Labyrinthdichtung, erforderlich ist.

Dies erfordert eine geometrisch oder materialtechnisch verstärkte Auslegung von Kurbelarm und Drehspindel, um die geforderte Dauer-Standfestigkeit im Betrieb zu gewährleisten. Dies wirkt sich wiederum negativ auf das Gewicht, die Dichtheit des Spindellagers und die Abmessungen des Abgasturboladers bzw. auf die Kosten der Ventilmechanik aus.

Der vorliegenden Erfindung liegt daher die Aufgabe zugrunde, einen Abgasturbolader mit Wastegate-Ventil anzugeben, bei dem die Betätigungskräfte zur Betätigung des Ventils gering sind jedoch Baugröße, Gewicht, Funktion und Kosten des Abgasturboladers dadurch nicht oder zumindest möglichst wenig negativ beeinflusst werden.

Diese Aufgabe wird gelöst durch einen Abgasturbolader mit den Merkmalen gemäß Patentanspruch 1. Vorteilhafte Aus- und Weiterbildungen, welche einzeln oder in Kombination miteinander eingesetzt werden können, sind Gegenstand der abhängigen Ansprüche.

Der Abgasturbolader weist eine Abgasturbine mit einem Turbinengehäuse auf. In dem Turbinengehäuse, das von einer Turbinegehäusewand umspannt wird ist ein Wastegate-Ventil angeordnet. Das Wastegate-Ventil ist als Kugelhahn-Ventil ausgeführt und weist ein kugelsegmentförmiges Schließelement und eine Betätigungskurbel auf. Die Betätigungskurbel weist einen Kurbelarm auf, an dessen vorderem Ende das Schließelement befestigt ist. Mit dem Kurbelarm einstückig verbunden, und somit eine Einheit bildend, ist eine Kurbelspindel. Der Kurbelarm mit dem Schließelement ist im Inneren des Turbinengehäuses angeordnet. Mit der Kurbelspindel durchdringt die Betätigungskurbel die Turbinengehäusewand nach außen und ist in der Turbinengehäusewand, um eine Kurbelspindeldrehachse drehbar, gelagert. Im Übergangsbereich zwischen Kurbelspindel und Kurbelarm ist ein Anschlag-Absatz vorgesehen, mit dem der Betätigungsarm an einem Gegenanschlag der Turbinengehäusewand oder einer Spindellagerbuchse anliegt. Dadurch wird die axiale Position des Betätigungsarms gegenüber der Turbinengehäusewand bestimmt und gleichzeitig der Lagerspalt des Kurbelspindellagers nach Art einer einfachen Labyrint-Dichtung gegen ausströmendes Abgas, den sogenannten "Blowby" verschlossen. Die Erfindung ist dadurch gekennzeichnet, dass im Anschluß an den Anschlag-Absatz, auf der gegen die Turbinengehäusewand gerichteten Kurbelarm-Innnenseite, eine Biegespannungs-Entlastungstasche vorgesehen ist, die eine gleichmäßigere Verteilung von Biegespannungen im Übergangsbereich zwischen Kurbelarm und Kurbelspindel bewirkt.

Mit der Erfindung werden folgende Vorteile erzielt.
Zunächst ermöglicht der Einsatz eines Kugelhahnventils durch die gegebenen Hebelverhältnisse eine gute Dichtheit des Wastegate-Ventils bei verhältnismäßig geringer Betätigungskraft. Weiterhin sorgt die Biegespannungs-Entlastungstasche für eine harmonischere Verteilung der Spannungslinien in der Betätigungskurbel, insbesondere im Bereich des Übergangs zwischen Kurbelarm und Kurbelspindel und im Bereich des Anschlag-Absatzes. Auf diese Weise werden die, durch die erhöhten Normalkräfte auf die Betätigungskurbel erzeugten, Biegespannungsspitzen, wie sie bisher im Bereich des Anschlag-Absatzes aufgetreten sind, wirkungsvoll vermieden und eine verstärkte geometrische oder materialtechnische Auslegung der Betätigungskurbel ist nicht erforderlich. Gleichzeitig ist es möglich den Anschlag-Absatz in der bekannten Form beizubehalten, was für die Abdichtung des Kurbelspindellagers von großer Bedeutung ist.

Vorteilhafte Ausgestaltungen der Erfindung werden in den Unteransprüchen offenbart.

Eine vorteilhafte Ausführung der Erfindung ist so gestaltet, dass sich die Biegespannungs-Entlastungstasche im Kurbelarm, in radialer Richtung auf die Kurbelspindeldrehachse zu, den Anschlag-Absatz hinterschneidend, bis in den Bereich des Kurbelspindel-Außendurchmessers erstreckt und an ihrem dort ausgebildeten Taschengrund eine abgerundete Kontur aufweist. Dadurch wird gewährleistet, dass die Biegespannungslinien im Kurbelarm entlang der Biegespannungs-Entlastungstasche um die abgerundete Kontur des Taschengrundes herum und so in weichem Bogen an dem Anschlag-Absatz vorbei in die Kurbelspindel verlaufen. Dadurch kommt es nicht zu den gefürchteten Spannungsspitzen an dem scharfkantigen (90° Winkel) Anschlag-Absatz und ein frühzeitiges Versagen des Bauteils aufgrund der an dieser Stelle auftretenden Kerbwirkung kann vermieden werden.

Als besonders vorteilhaft hat sich herausgestellt, wenn die abgerundete Kontur am Taschengrund der Biegespannungs-Entlastungstasche einen Radius zwischen 0,2 mm und 1,5 mm aufweist. Dadurch wird einerseits gewährleistet, dass die Materialstärke des Kurbelarms nicht übermäßig geschwächt, andererseits eine genügend große Rundung am Taschengrund vorliegt um kritische Spannungsspitzen zu vermeiden.

Eine weitere Ausführung der Erfindung ist dadurch gekennzeichnet, dass sich die Biegespannungs-Entlastungstasche entlang der Kurbelarm-Innenseite, also auf der Innenseite des durch Kurbelspindel und Kurbelarm aufgespannten Kniewinkels, auf der der Turbinengehäusewand zugewandten Seite des Kurbelarms erstreckt und beidseitig durch je eine Verstärkungsrippe begrenzt ist. Der Verlauf der Verstärkungsrippen sowie der Verlauf der Biegespannungs-Entlastungstasche folgen dabei dem Verlauf des Kurbelarmes. Diese Gestaltung der Biegespannungs-Entlastungstasche ergibt eine herstellungstechnisch günstige Kurbelarm -Geometrie und gewährleistet gleichzeitig eine hohe Steifigkeit gegen Durchbiegen des Kurbelarmes, trotz der durch die Biegespannungs-Entlastungstasche geschwächte Materialdicke des Kurbelarms, bei Einwirkung der Abgaskräfte im Betrieb.

Weiterhin vorteilhaft ist es, wenn die Höhe der Verstärkungsrippen auf der Kurbelarm-Innenseite so gewählt ist, dass diese, ausgehend von der Kurbelarm-Innenseite in Richtung der Kurbelspindeldrehachse maximal bis in den Bereich des Anschlag-Absatzes reichen. Auf diese Weise ist die maximale Steifigkeit des Kurbelarmes gegen Durchbiegen des Kurbelarmes, bei Einwirkung der Abgaskräfte im Betrieb, gewährleistet und gleichzeitig ermöglicht diese Formgebung eine erhebliche Materialeinsparung am Kurbelarm, was wiederum geringeres Gewicht und niedrigere Kosten mit sich bringt.

Mit anderen Worten zusammengefasst betrifft der Kern der Erfindung einen Abgasturbolader mit einem Turbinengehäuse und einem darin angeordneten Wastegate-Ventil in Kugelhahn-Bauweise. Die Betätigungskurbel des Wastegate-Ventils weist einen Kurbelarm, an dem das Schließelement befestigt ist, und eine mit dem Kurbelarm einstückig verbundene, in der Turbinengehäusewand gelagerte Kurbelspindel auf. Im Übergangsbereich zwischen Kurbelspindel und Kurbelarm ist ein Anschlag-Absatz zur Abdichtung des Kurbelspindellagers und eine Biegespannungs-Entlastungstasche vorgesehen, wodurch die Abdichtung des Kurbelspindellagers und eine gleichmäßigere Verteilung von Biegespannungen im Übergangsbereich zwischen Kurbelarm und Kurbelspindel bewirkt und somit eine erhöhte Standzeit der Betätigungskurbel bei gleichzeitig sparsamer Auslegung gewährleistet wird.

Ausführungsbeispiele der Erfindung werden im Folgenden anhand der Darstellungen in der Zeichnung näher erläutert.

Es zeigen:
- Fig. 1: eine Schnittdarstellung eines Turbinengehäuses in Seitenansicht mit einem Klappenventil gemäß dem Stand der Technik,
- Fig. 2: eine Schnittdarstellung eines Turbinengehäuses in Seitenansicht mit einem Kugelhahnventil gemäß dem Stand der Technik,
- Fig. 3: eine Schnittdarstellung des Turbinengehäuses aus Figur 2 in perspektivischer Anssicht,
- Fig. 4: eine Schnittdarstellung der Wastegate-Anordnung eines erfindungsgemäßen Abgasturboladers und
- Fig. 5: eine Darstellung einer Betätigungskurbel eines Waste -Gate-Ventils eines erfindungsgemäßen Abgas-Turboladers in drei Ansichten.

Funktions- und Benennungsgleiche Teile sind in den Figuren durchgehend mit den selben Bezugszeichen versehen.

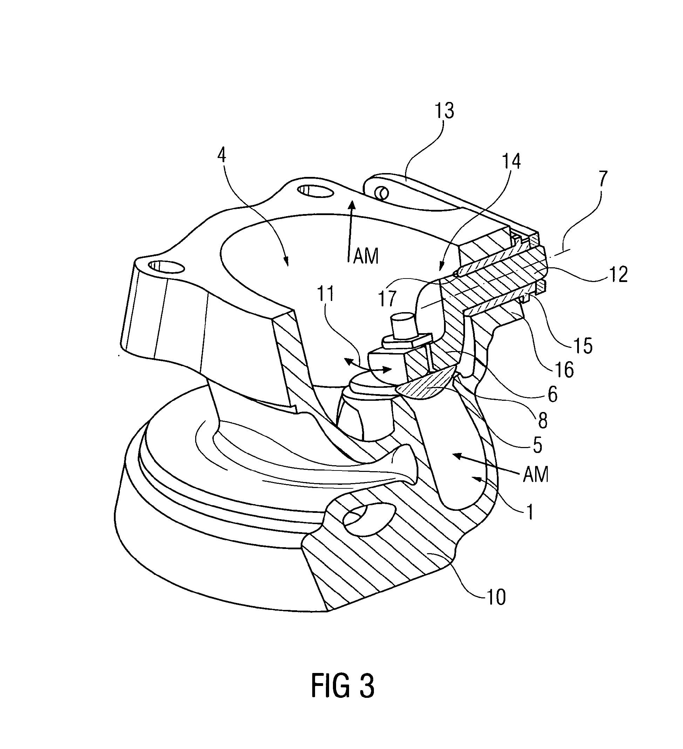

Die Gegenstände der Figuren 1, 2 und 3 zeigen den vorbekannten Stand der Technik und werden bereits in der Einleitung der Beschreibung entsprechend in Bezug genommen.

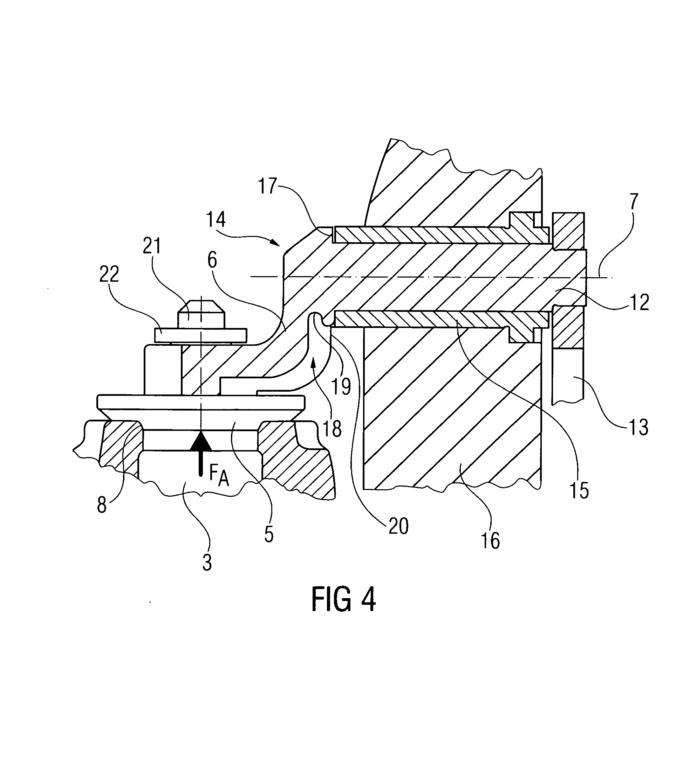

Die Figur 4 zeigt ein Kugelhahn-Wastegate-Ventil in einer Ausführung wie sie in dem erfindungsgemäßen Abgasturbolader eingesetzt ist. Am Kurbelarm 6 der Betätigungskurbel 14 ist das Schließelement 5 befestigt. Das Schließelement 5 weist einen Ausschnitt eines Kugelsegmentes auf, der auf dem Ventilsitz 8 aufsitzt und den Wastegate-Kanal 3 dadurch dicht verschließt. Zur Befestigung des Schließelementes 5 am Kurbelarm weist das Schließelement 5 einen Befestigungszapfen 21 auf, der durch eine entsprechende Durchgangsbohrung am Ende des Kurbelarms 6 gesteckt und mit einer Sicherungsscheibe 22 in dieser Position gesichert ist. Die Kurbelspindel 12 des Betätigungsarms 14 durchdringt die Turbinengehäusewand 16 und ist in dieser mittels der Spindellagerbuchse 15 drehbar um die Kurbelspindeldrehachse 7 gelagert. Auf der Außenseite des Turbinengehäuses ist ein Stellhebel 13 drehfest mit der Kurbelspindel der Betätigungskurbel 14 verbunden. Mittels eines Aktuators (nicht dargestellt) wird auf den Stellhebel 13 eine Betätigungskraft ausgeübt, die als Drehmoment auf die Kurbelspindel 12 wirkt und die Betätigungskurbel 14 um die Kurbelspindeldrehachse 7 in Drehung versetzt. Je nach Wirkrichtung der Betätigungskraft wird das Schließelement 5 auf den Ventilsitz 8 hin oder von diesem weg geschwenkt und das Wastegate-Ventil somit geschlossen bzw. geöffnet. Der Kurbelarm 6 ist einstückig zusammen mit der Kurbelspindel 12 als Einheit ausgebildet und bildet einen Winkel von 90° mit der Kurbelspindel. Im weiteren Verlauf von der Kurbelspindel 12 weg verläuft der Kurbelarm in einem 90°-Bogen und verläuft schließlich parallel zur Kurbelspindeldrehachse 7. Die Aufnahmebohrung für den Befestigungszapfen 21 des Schließelements 5 ist wiederum in einem 90°-Winkel am Ende des Kurbelarmes angeordnet, so dass die Mittelachse des Schließelements 5 wiederum im 90°-Winkel zur Kurbelspindeldrehachse 7 angeordnet ist. Die Wirkrichtung der Abgaskraft F_{A} ist in Figur 4 durch den mit F_{A} bezeichneten Pfeil angedeutet.

Im Übergangsbereich zwischen Kurbelspindel 12 und Kurbelarm 6 ist an der Betätigungskurbel 14 ein Anschlag-Absatz 17 ausgebildet, mit dem die Betätigungskurbel auf der Stirnseite der Spindellagerbuchse 15 anliegt und so die axiale Position der Betätigungskurbel vorgibt. Darüber hinaus überdeckt der Anschlag-Absatz 17 dadurch den Lagerspalt zwischen Kurbelspindel 12 und Spindellagerbuchse 15 und dient so als einfache Labyrinth-Dichtung zur Abdichtung des Lagerspaltes. Dadurch wird das Abblasen von Abgas über den Lagerspalt (Blowby) vermieden. Aus der Richtung der Kurbelspindel 12 gesehen ist die Biegespannungs-Entlastungstasche 18 hinter dem Anschlag-Absatz 17 im Kurbelarm angeordnet.

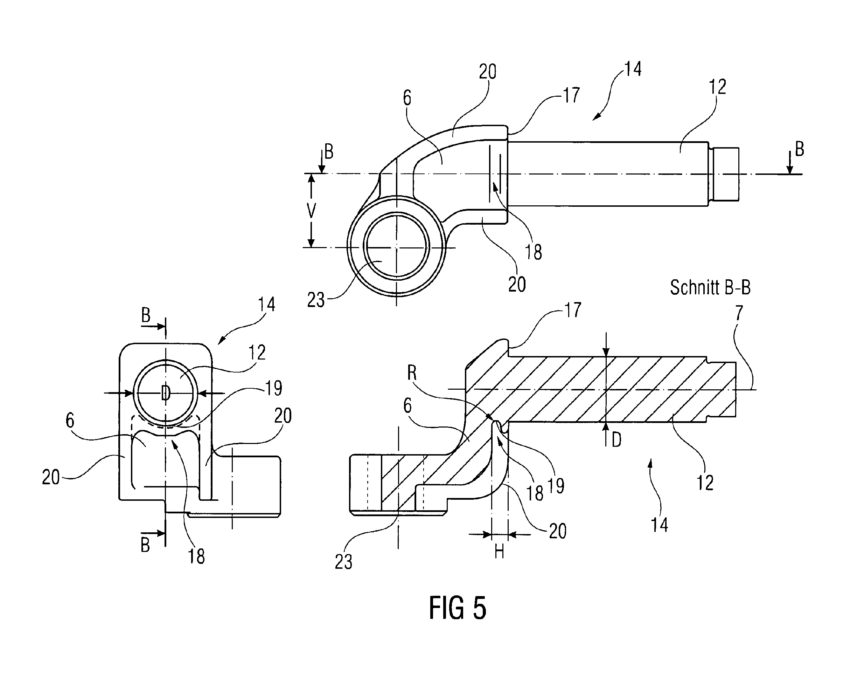

Wie besonders deutlich aus Figur 5 hervorgeht, in der die Betätigungskurbel 14 alleine in drei unterschiedlichen Ansichten dargestellt ist, erstreckt sich die Biegespannungs-Entlastungstasche 18 im Kurbelarm 6, radial in Richtung auf die Kurbelspindeldrehachse 7 zu, den Anschlag-Absatz hinterschneidend, bis in den Bereich des Kurbelspindel-Außendurchmessers D und bildet an ihrem dort ausgebildeten Taschengrund 19 eine abgerundete Kontur, die einen Radius R aufweist. Durch diesen Einstich ist die Materialstärke des Kurbelarmes 6 geschwächt. Um diese Schwächung auszugleichen ist der Kurbelarm (6) an seinen seitliche Rändern mit Vertärkungsrippen 20 augestattet, die die Biegespannungs-Entlastungstasche 18 seitlich begrenzen und erheblich zur Versteifung des Kurbelarms 6 beitragen. Aus der Schnittdarstellung B - B, in der Seitenansicht der Betätigungskurbel 14 in Figur 5 unten rechts, wird ersichtlich, dass die Höhe H der Verstärkungsrippen 20 so gewählt ist, dass diese in Richtung der Kurbelspindeldrehachse 7 bis zum Anschlag-Absatz 17 reichen und so in einer Ebene in den Anschlag-Absatz 17 übergehen.

Die Betätigungskurbel 14 weist insgesamt eine relativ komplexe Geometrie auf. Der Kurbelarm 6 bildet zunächst einen 90°-Winkel mit der Kurbelspindel 12, um in seiner weiteren Erstreckung wiederum einen 90°-Bogen zu beschreiben, so dass der Kurbelarm 6 nach diesem Bogen parallel zur Kurbelspindeldrehachse 7 verläuft. An dem der Kurbelspindel 12 abgewandten Ende des Kurbelarms 6 ist die Aufnahmebohrung 23 zur Aufnahme des Befestigungszapfens 21 des Schließelements 5 mittels einer Sicherungsscheibe 22 (siehe Figur 4) angeordnet. Die Aufnahmebohrung 23 ist dabei mit einem Versatz V zur Kurbelspindeldrehachse am Ende des Kurbelarms 6 angeordnet. Dadurch bewirkt die Abgaskraft FA (siehe Fig. 4), im geschlossenen Zustand des Wastegate-Ventils, nicht nur eine auf die Betätigungskurbel 14 wirkende Biegekraft sondern über den Versatz V gleichzeitig ein Dreh- oder Kurbelmoment.

## Patentansprüche

1. Abgasturbolader mit einem, eine Turbinegehäusewand (16) aufweisenden, Turbinengehäuse (10) und einem Wastegate-Ventil in dem Turbinengehäuse (10),
wobei das Wastegate-Ventil als Kugelhahn-Ventil ausgeführt ist, das ein kugelsegmentförmiges Schließelement (5), eine Betätigungskurbel (14) mit einem Kurbelarm (6), an dem das Schließelement (5) befestigt ist und eine mit dem Kurbelarm (6) einstückig verbundene, in der Turbinengehäusewand (16), um eine Kurbelspindeldrehachse (7) drehbar, gelagerte Kurbelspindel (12) aufweist, wobei im Übergangsbereich zwischen Kurbelspindel (12) und Kurbelarm (6) ein Anschlag-Absatz (17) vorgesehen ist,
**dadurch gekennzeichnet, dass**
im Anschluss an den Anschlag-Absatz (17), auf der gegen die Turbinengehäusewand (16) gerichteten Kurbelarm-Innenseite, eine Biegespannungs-Entlastungstasche (18) vorgesehen ist, die eine gleichmäßigere Verteilung von Biegespannungen im Übergangsbereich zwischen Kurbelarm (6) und Kurbelspindel (12) bewirkt.

2. Abgasturbolader nach Anspruch 1, **dadurch gekennzeichnet, dass** sich die Biegespannungs-Entlastungstasche (18) im Kurbelarm (6), in radialer Richtung auf die Kurbelspindeldrehachse (7) zu, den Anschlag-Absatz (17) hinterschneidend, bis in den Bereich des Kurbelspindel-Außendurchmessers (D) erstreckt und an einem dort ausgebildeten Taschengrund (19) eine abgerundete Kontur aufweist.

3. Abgasturbolader nach Anspruch 2, **dadurch gekennzeichnet, dass** die abgerundete Kontur am Taschengrund (19) einen Radius (R) zwischen 0,2 mm und 1,5 mm aufweist.

4. Abgasturbolader nach Anspruch 2, **dadurch gekennzeichnet, dass** sich die Biegespannungs-Entlastungstasche (18) entlang der Kurbelarm-Innenseite erstreckt und beidseitig durch je eine Verstärkungsrippe (20) begrenzt ist.

5. Abgasturbolader nach Anspruch 4, **dadurch gekennzeichnet, dass** die Höhe (H) der Verstärkungsrippen (20) auf der Kurbelarm-Innenseite so gewählt ist, dass diese in Richtung der Kurbelspindeldrehachse (7) maximal bis in den Bereich des Anschlag-Absatzes reichen.

## Claims

1. Exhaust-gas turbocharger having a turbine housing (10) which has a turbine housing wall (16) and having a wastegate valve in the turbine housing (10), wherein the wastegate valve is in the form of a ballcock-type valve which has a spherical-segment-shaped closing element (5), an actuating crank (14) with a crank arm (6) to which the closing element (5) is fastened, and a crank spindle (12) which is integrally connected to the crank arm (6) and which is mounted in the turbine housing wall (16) so as to be rotatable about a crank spindle axis of rotation (7), wherein an abutment shoulder (17) is provided in the transition region between crank spindle (12) and crank arm (6),
**characterized in that**,
adjoining the abutment shoulder (17) on the crank arm inner side directed toward the turbine housing wall (16), there is provided a flexural-stress relief pocket (18) which effects a more uniform distribution of flexural stresses in the transition region between crank arm (6) and crank spindle (12).

2. Exhaust-gas turbocharger according to Claim 1, **characterized in that** the flexural-stress relief pocket (18) extends in the crank arm (6) in the radial direction toward the crank spindle axis of rotation (7) as far as into the region of the crank spindle outer diameter (D), so as to undercut the abutment shoulder (17), and has a rounded contour at a pocket base (19) formed there.

3. Exhaust-gas turbocharger according to Claim 2, **characterized in that** the rounded contour on the pocket base (19) has a radius (R) of between 0.2 mm and 1.5 mm.

4. Exhaust-gas turbocharger according to Claim 2, **characterized in that** the flexural-stress relief pocket (18) extends along the crank arm inner side and is delimited on both sides by in each case one reinforcement rib (20).

5. Exhaust-gas turbocharger according to Claim 4, **characterized in that** the height (H) of the reinforcement ribs (20) on the crank arm inner side is selected such that said reinforcement ribs extend in the direction of the crank spindle axis of rotation (7) at most as far as into the region of the abutment shoulder.

## Revendications

1. Turbocompresseur à gaz d'échappement comprenant un logement de turbine (10) présentant une paroi de logement de turbine (16) et une soupape à décharge dans le logement de turbine (10),
la soupape à décharge étant réalisée comme une soupape à boisseau sphérique qui présente un élément de fermeture en forme de segment sphérique (5), une manivelle d'actionnement (14) avec un bras de manivelle (6) sur lequel est fixé l'élément de fermeture (5) et un mandrin de manivelle (12) relié d'une seule pièce avec le bras de manivelle (6), monté dans la paroi de logement de turbine (16) et pouvant être mis en rotation autour d'un axe de rotation du mandrin de la manivelle (7), un épaulement de butée (17) étant prévu dans la zone de transition entre le mandrin de manivelle (12) et le bras de manivelle (6),
**caractérisé**
**en ce qu'**il est prévu à la suite de l'épaulement de butée (17), sur le côté intérieur du bras de manivelle dirigé contre la paroi de logement de turbine (16), une poche de décharge des contraintes de flexion (18) qui réalise une répartition plus régulière des contraintes de flexion dans la zone de transition entre le bras de manivelle (6) et le mandrin de manivelle (12).

2. Turbocompresseur à gaz d'échappement selon la revendication 1, **caractérisé en ce que** la poche de décharge des contraintes de flexion (18) s'étend dans le bras de manivelle (6), dans le sens radial en direction de l'axe de rotation du mandrin de la manivelle (7), en formant une contre-dépouille par rapport à l'épaulement de butée (17), jusqu'à la zone du diamètre extérieur du mandrin de la manivelle (D) et elle présente un contour arrondi au niveau d'un fond de poche (19) réalisé à cet endroit.

3. Turbocompresseur à gaz d'échappement selon la revendication 2, **caractérisé en ce que** le contour arrondi au niveau du fond de la poche (19) présente un rayon (R) compris entre 0,2 mm et 1,5 mm.

4. Turbocompresseur à gaz d'échappement selon la revendication 2, **caractérisé en ce que** la poche de décharge des contraintes de flexion (18) s'étend le long du côté intérieur du bras de manivelle et elle est délimitée des deux côtés par une nervure de renforcement (20) respective.

5. Turbocompresseur à gaz d'échappement selon la revendication 4, **caractérisé en ce que** la hauteur (H) des nervures de renforcement (20) réalisées sur le côté intérieur du bras de manivelle est choisie de telle sorte que celles-ci s'étendent au maximum, dans la direction de l'axe de rotation du mandrin de la manivelle (7), jusqu'à la zone de l'épaulement de butée.
